# EUROPEAN PATENT SPECIFICATION

(11) **EP 1 878 528 B1**
(45) Date of publication and mention of the grant of the patent: **05.09.2012**
(21) Application number: 07252798.9
(22) Date of filing: 13.07.2007
(51) Int. Cl.: B23K 9/00

(54) **A method of weld repairing or cladding a steel bloom rail or other part of a railway**
Verfahren zur Schweißreparatur oder Beschichtung einer Stahlstrangschiene oder eines anderen Teils einer Schienenstrecke
Procédé de réparation de soudure ou revêtement de rail bloom en acier ou autre pièce d'un rail de train

(30) Priority: 14.07.2006 GB 0614018; 14.11.2006 GB 0622674
(43) Date of publication of application: 16.01.2008
(73) Proprietor: Tata Steel UK Limited, London SW1P 4WY (GB)
(72) Inventor: Jerath, Vijay, London SW1P 4WY (GB); Jaiswal, Shreekant, London SW1P 4WY (GB)
(74) Representative: Bodin, Andre

(56) References cited:
- GB-A- 475 709
- GB-A- 1 203 978
- US-A- 5 994 659

## Description

The invention relates to a method of weld repairing or cladding steel blooms, rails (e.g. flat bottom track rails, tramway rails and crane rails) or other railway parts such as rail heads, railway switches and fabricated /machined railway crossings.

GB 446 111 discloses a method of weld repairing steel track rails using a preheat temperature of between 250°C and 550°C.

Standards governing weld repair of rails in modem railways such as Network Rail Standard NR/SP/TRK/132 Issue (formerly RT/CE/X/132) "Weld repair of Rails" state that when repair welding a rail, the area to be welded, including 75mm at each end, should be subjected to an initial pre-heat of 343°C, maintained throughout welding. This procedure applies for both 220 and 260 grades of rail steel.

The selection of a given pre-heat temperature (e.g. of around 350°C for the repair welding of Grade 220 and 260 rails) is based on the concept of reducing the post weld cooling rate of the heat affected zone (HAZ) to such an extent so as to allow the austenite to pearlite transformation to go to completion during cooling of the weld, thus avoiding the formation of very hard (~900 HV) and brittle martensite in the microstructure developed subsequently within the HAZ of the weld. In the absence of a pre-heating stage, the heat sink provided by the rail mass would result in a more rapid cooling rate leading to transformation of significant quantities of austenite to brittle martensite.

A problem with the known method is that the HAZ which results from the known method can be prone to cracking.

It is an object of the present invention to seek to mitigate the above problem.

According to a first aspect, the invention provides a method of weld repairing or cladding a steel bloom, rail or other railway part, wherein the bloom, rail or railway part is pre-heated before repair welding, the temperature of the pre-heat being such that the heat affected zone (HAZ) of the bloom, rail or railway part after laying of the first weld bead comprises at least 10% austenite, immediately prior to the laying of the second weld bead,

The applicant has found that retaining some austenite in the HAZ results in a softer and tougher HAZ which is less prone to cracking as a result of the relatively high tensile residual stresses generated following the solidification of the weld metal. Three main factors are believed to contribute to this softer and tougher HAZ. Firstly, austenite is relatively soft and ductile. Secondly, as the solubility of hydrogen in austenite is several magnitudes higher than the solubility of hydrogen in martensite, retaining some austenite in the HAZ means that the HAZ is capable of tolerating relatively high amounts of hydrogen diffusing across the weld metal HAZ interface, thereby reducing hydrogen related "cold" cracking. Thirdly, martensite present in the HAZ following laying of the first weld bead is tempered breaking down in to a significantly tougher aggregate of ferrite and carbide during the laying of the second weld bead.

This is achieved by using a "chill removal" treatment that permits transformation to martensite to occur within the HAZ region, but prevents it from going to completion by retaining a proportion of austenite.

After laying of the first weld bead, the HAZ may comprise at least 20% austenite, preferably at least 30% austenite, more preferably at least 40% austenite, most preferably at least 50% austenite. The applicant has found that a HAZ comprising 40% to 50% austenite in the HAZ after laying the first weld bead has the best metallurgical properties.

Preferably, substantially all of the balance of the HAZ comprises martensite. The HAZ may also comprise some pearlite.

The applicant has found that it is possible to increase the amount of austenite in the HAZ by using a pre-heat temperature which is substantially lower than that used in the known method, thereby preventing the austenite to martensite transformation from going to completion during cooling of the first weld bead. Thus, the temperature of the pre-heat is preferably less than 300°C, preferably less than 200°C.

The applicant has found that the best balance between austenite and martensite is found when the temperature of the pre-heat is in the range 20°C to 150°C, preferably in the range 60°C to 80°C.

An added advantage of using a low pre-heat temperature is that it means that the method may be used to repair rails such as tramway rails where the rails are encased in a polymer which breaks down, and begins to lose adhesion with the rail at temperatures of around 160°C. Furthermore, any burning of the polymer results in toxic fumes and hence the need to control temperature to below 160°C is essential. A low pre-heat temperature also increases productivity.

The steel bloom, rail or railway part may be made from a medium or high carbon steel grade, for example, the steel rail may be made from a 220 or 260 grade of steel.

The pre-heat may be maintained throughout the duration of the weld deposition/weld repair.

Any suitable weld parameters may be used. The applicant has found that an acceptable weld deposition can be carried out using a weld heat input of between 5 and 20kJ/cm.

According to a second aspect, the invention provides a method of weld repairing or cladding a steel bloom, rail or railway part, wherein the bloom, rail or railway part is pre-heated before repair welding or cladding, the temperature of the pre-heat being less than 300°C, preferably less than 200°C.

The temperature of the pre-heat is preferably in the range 20°C to 150°C, more preferably in the range 60°C to 80°C.

According to a third aspect, the invention provides a steel bloom, rail or railway part which has been repaired or clad using a method according to the invention.

There are wide ranging applications of the invention that, amongst others, include restoration of worn gauge faces of grooved tramway rails and other main line rail sections, repair of discrete defects on running surface of rails, restoration of worn faces of railway parts such as switch blades and crossings, and the production of composite blooms.

The invention will now be illustrated by way of example with reference to the following drawings of which:
Figure 1 shows a macrograph of a longitudinal - vertical section obtained through the centre of a two layer weld deposit on the running surface of a grade 260 tramway rail made using a method according to the present invention involving the use of open arc welding and flux cored wire;
Figure 2 shows a macrograph of a transverse section through a weld repaired groove of a grade 260 tramway rail made using a method according to the invention; and

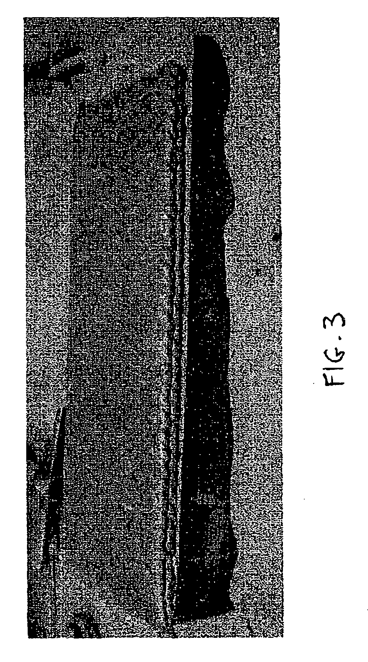

Figure 3 shows a photograph of a steel bloom of Grade 260 rail steel clad using a method according to the invention.

A chill removal burner unit, employing propane or similar gas, was used to pre-heat the running surface of the tramway rail. The temperature of the running surface of the rail was brought to between 60° and 80°C.

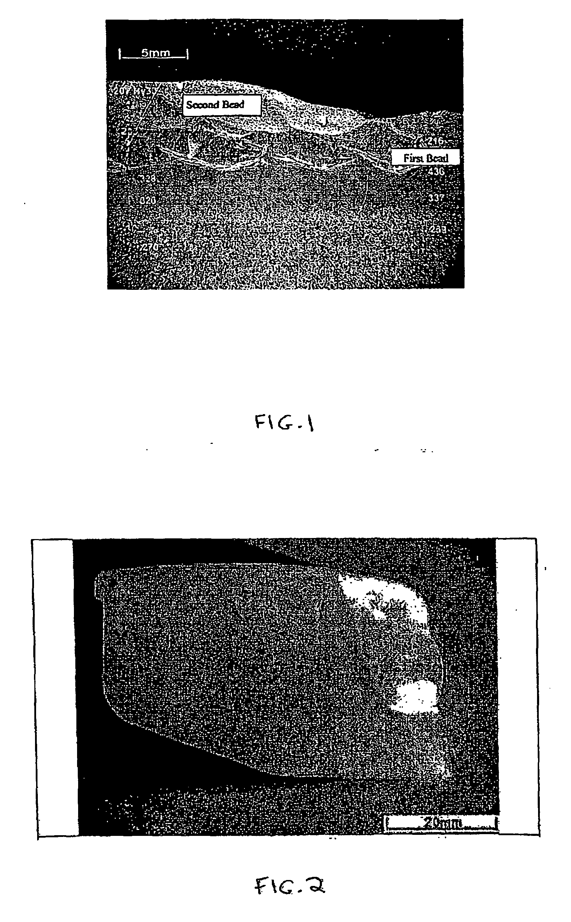

The macrograph shown In Figure 1 shows that a moderately high hardness of 436 HV (on the RHS of the macrograph) within the coarse grained HAZ of the first weld bead is reduced to a HAZ hardness level of 328 HV (on the LHS of the macrograph) as a result of the tempering effect of the second weld bead,

For multipass submerged arc welding (SAW) weld deposition of a worn grade 260 tramway rail, as shown in Fig. 2, the subsequent inter-pass temperature was measured on the rail head using a contact pyrometer, prior to starting each weld deposition pass. If the interpass temperature was found to have risen to above the maximum specified interpass temperature of 130°C, the weld deposition process was stopped until the rail head temperature had dropped to below this value.

The advantages of the method according to the invention are as follows:
- An overall softer and tougher HAZ, less prone to cracking as a result of the relatively high tensile residual stresses generated following the solidification of the weld metal. The resulting structure is also less prone to hydrogen related "cold" cracking, which is generally at its most pronounced at temperatures close to ambient.
- A HAZ capable of tolerating relatively high amounts of embrittling hydrogen diffusing across the weld metal/HAZ interface, due to the fact that the solubility of hydrogen in austenite is known to be several magnitudes higher than that in martensite/ferrite.
- The recognition that the deleterious martensite present within the HAZ microstructure following laying of the first/root weld bead is subsequently heavily tempered (breaking down into a significantly tougher aggregate of ferrite and carbide) during the laying of the second weld bead.

The method of the invention may also be used to clad a steel bloom, rail or other railway part using just wire or wire and flux.

## Claims

1. A method of weld repairing or cladding a steel bloom, rail, rail head, railway switch, switch blade or railway crossing, wherein the steel is a medium or high carbon steel grade, wherein the bloom, rail, rail head, railway switch, switch blade or railway crossing, is pre-heated before repair welding or cladding, to permit transformation to martensite to occur within the heat affected zone (HAZ) region of the weld during cooling of the weld, but to prevent the transformation from going to completion by retaining a proportion of austenite, the temperature of the pre-heat being less than 200°C, wherein the HAZ of the bloom, rail, rail head, railway switch, switch blade or railway crossing after laying of the first weld bead comprises at least 10% austenite immediately prior to the laying of the second weld bead and wherein the martensite present in the HAZ following laying of the first weld bead is tempered breaking down in to a significantly tougher aggregate of ferrite and carbide during the laying of the second weld bead.

2. A method according to claim 1, wherein, after laying of the first weld bead, the HAZ of the bloom, rail, rail head, railway switch, switch blade or railway crossing after laying of the first weld bead comprises at least 20% austenite, preferably at least 30% austenite, more preferably at least 40% austenite, most preferably at least 50% austenite.

3. A method according to claim 1, wherein, after laying of the first weld bead, the HAZ of the bloom, rail, rail head, railway switch, switch blade or railway crossing after laying of the first weld bead comprises 40% to 50% austenite.

4. A method according to any one of the preceding claims, wherein, after laying of the first weld bead, substantially all of the balance of the HAZ of the bloom, rail, rail head, railway switch, switch blade or railway crossing after laying of the first weld bead comprises martensite.

5. A method according to claim 1, wherein the temperature of the pre-heat is in the range 20°-150°C, preferably in the range 60°C-80°C.

6. A method according to claim 1, wherein the temperature of the pre-heat is in the range 20°-80°C.

7. A method according to any one of the preceding claims, wherein the steel bloom, rail or railway part is made from 260 grades of steel.

8. A method according to any preceding claim, wherein the pre-heat is maintained throughout weld deposition / weld repair.

9. A method according to any one of the preceding claims wherein the welding process is multipass submerged arc welding and wherein the inter-pass temperature is measured using a contact pyrometer prior to starting each weld deposition pass, preferably wherein the interpass temperature is maintained below 130°C.

10. A method according to any one of claims 1 to 9 wherein the welding process involves the use of open arc welding and flux cored wire.

## Patentansprüche

1. Verfahren zum Schweißreparieren oder -plattieren eines Vorblocks, einer Schiene, eines Schienenkopfs, einer Eisenbahnweiche, einer Weichenzunge oder einer Eisenbahnkreuzung aus Stahl, wobei der Stahl eine Stahlsorte mit mittlerem oder hohem Kohlenstoffgehalt ist, wobei der Vorblock, die Schiene, der Schienenkopf, die Eisenbahnweiche, die Weichenzunge oder die Eisenbahnkreuzung vor dem Schweißreparieren oder -plattieren vorgewärmt wird, um zu ermöglichen, dass eine Umformung zu Martensit innerhalb des Bereichs der Wärmeeinflusszone (heat affected zone - HAZ) der Schweißung während des Abkühlens der Schweißung stattfindet, aber zu verhindern, dass die Umformung zum Abschluss kommt, durch das Erhalten eines Anteils an Austenit, wobei die Temperatur der Vorwärmung geringer als 200 °C ist, wobei die HAZ des Vorblocks, der Schiene, des Schienenkopfs, der Eisenbahnweiche, der Weichenzunge oder der Eisenbahnkreuzung nach dem Legen der ersten Schweißraupe unmittelbar vor dem Legen der zweiten Schweißraupe wenigstens 10 % Austenit umfasst und wobei das anschließend an das Legen der ersten Schweißraupe in der HAZ vorhandene Martensit angelassen wird, wobei es sich während des Legens der zweiten Schweißraupe in ein bedeutend zäheres Aggregat aus Ferrit und Karbid zerlegt.

2. Verfahren nach Anspruch 1, wobei, nach dem Legen der ersten Schweißraupe, die HAZ des Vorblocks, der Schiene, des Schienenkopfs, der Eisenbahnweiche, der Weichenzunge oder der Eisenbahnkreuzung nach dem Legen der ersten Schweißraupe wenigstens 20 % Austenit, vorzugsweise wenigstens 30 % Austenit, insbesondere wenigstens 40 % Austenit, am bevorzugtesten wenigstens 50 % Austenit umfasst.

3. Verfahren nach Anspruch 1, wobei, nach dem Legen der ersten Schweißraupe, die HAZ des Vorblocks, der Schiene, des Schienenkopfs, der Eisenbahnweiche, der Weichenzunge oder der Eisenbahnkreuzung nach dem Legen der ersten Schweißraupe 40 % bis 50 % Austenit umfasst.

4. Verfahren nach einem der vorhergehenden Ansprüche, wobei, nach dem Legen der ersten Schweißraupe, im Wesentlichen die Gesamtheit des Gleichgewichts der HAZ des Vorblocks, der Schiene, des Schienenkopfs, der Eisenbahnweiche, der Weichenzunge oder der Eisenbahnkreuzung nach dem Legen der ersten Schweißraupe Martensit umfasst.

5. Verfahren nach Anspruch 1, wobei die Temperatur der Vorwärmung in dem Bereich von 20 °C-150 °C, vorzugsweise in dem Bereich von 60 °C-80 °C liegt.

6. Verfahren nach Anspruch 1, wobei die Temperatur der Vorwärmung in dem Bereich von 20 °C-80 °C liegt.

7. Verfahren nach einem der vorhergehenden Ansprüche, wobei der Vorblock, die Schiene oder das Eisenbahnteil aus Stahl aus einer Stahlsorte 260 hergestellt ist.

8. Verfahren nach einem der vorhergehenden Ansprüche, wobei die Vorwärmung durch die gesamte Schweißabscheidung/Schweißreparatur aufrechterhalten wird.

9. Verfahren nach einem der vorhergehenden Ansprüche, wobei das Schweißverfahren Unterpulverschweißen mit mehreren Schweißgängen ist und wobei die Temperatur zwischen den Schweißgängen vor dem beginnen jedes Schweißabscheidungsdurchgangs unter Verwendung eines Kontaktpyrometers gemessen wird, wobei die Temperatur zwischen den Schweißgängen vorzugsweise unter 130 °C gehalten wird.

10. Verfahren nach einem der Ansprüche 1 bis 9, wobei das Schweißverfahren die Verwendung von schutzgaslosem Lichtbogenschweißen und Fülldrahtelektroden einschließt.

## Revendications

1. Procédé de réparation de soudure ou de gainage d'un voile d'acier, d'un rail, d'une tête de rail, d'un commutateur ferroviaire, d'une lame de commutation ou d'un croisement de rails, dans lequel l'acier est une qualité d'acier au carbone de grade moyen ou élevé, le voile, le rail, la tête de rail, le commutateur ferroviaire, la lame de commutation ou le croisement de rails étant préchauffé avant le soudage de réparation ou le gainage afin de permettre que la transformation en martensite se produise dans la région de la zone touchée par la chaleur (HAZ) de la soudure pendant le refroidissement de la soudure mais d'empêcher la transformation de se terminer en retenant une proportion d'austénite, la température de pré-chauffe étant inférieure à 200° C, la HAZ du voile, du rail, de la tête de rail, du commutateur ferroviaire, de la lame de commutation ou du croisement de rails contenant, après application du premier cordon de soudure, au moins 10 % d'austénite juste avant l'application du deuxième cordon de soudure et la martensite présente dans la HAZ à la suite de l'application du première cordon de soudure étant tempérée en se dissolvant en un agrégat nettement plus tenace de ferrite et de carbure pendant l'application du deuxième cordon de soudure.

2. Procédé selon la revendication 1, dans lequel, après l'application du premier cordon de soudure, la HAZ du voile, du rail, de la tête de rail, du commutateur ferroviaire, de la lame de commutation ou du croisement de rails, après application du premier cordon de soudure, comprend au moins 20 % d'austénite, de préférence au moins 30 % d'austénite, plus préférentiellement au moins 40 % d'austénite, le plus préférentiellement au moins 50 % d'austénite.

3. Procédé selon la revendication 1, dans lequel, après l'application du premier cordon de soudure, la HAZ du voile, du rail, de la tête de rail, du commutateur ferroviaire, de la lame de commutation ou du croisement de rails, après application du premier cordon de soudure, comprend 40 à 50 % d'austénite.

4. Procédé selon l'une quelconque des revendications précédentes, dans lequel, après application du premier cordon de soudure, sensiblement tout le volume de la HAZ du voile, du rail, de la tête de rail, du commutateur ferroviaire, de la lame de commutation ou du croisement de rails comprend de la martensite après l'application du premier cordon de soudure.

5. Procédé selon la revendication 1, dans lequel la température de la pré-chauffe se situe dans la plage de 20° à 150° C, de préférence dans la plage de 60° C à 80° C.

6. Procédé selon la revendication 1, dans lequel la température de la pré-chauffe se situe dans la plage de 20° à 80° C.

7. Procédé selon l'une quelconque des revendications précédentes, dans lequel le voile d'acier, le rail ou la pièce de rail est fait de 260 grades d'acier.

8. Procédé selon l'une quelconque des revendications précédentes, dans lequel la pré-chauffe est maintenue pendant tout le temps de dépôt de soudure / réparation de soudure.

9. Procédé selon l'une quelconque des revendications précédentes, dans lequel le procédé de soudage est le soudage à l'arc multipasse submergé et dans lequel la température d'interpasse est mesurée en utilisant un pyromètre à contact avant de démarrer chaque passe de dépôt de soudure, la température d'interpasse étant de préférence maintenue en dessous de 130° C.

10. Procédé selon l'une quelconque des revendications 1 à 9, dans lequel le procédé de soudage comprend l'utilisation du soudage à l'arc ouvert et de fil fourré.
